(19) **Europäisches Patentamt / European Patent Office / Office européen des brevets**

(11) **EP 2 638 120 B1**

(12) **EUROPÄISCHE PATENTSCHRIFT**

(45) Veröffentlichungstag und Bekanntmachung des Hinweises auf die Patenterteilung:
**05.01.2022  Patentblatt 2022/01**

(21) Anmeldenummer: **11779149.1**

(22) Anmeldetag: **27.10.2011**

(51) Int Cl.:
***C09J 7/00*** *(2018.01)*

(86) Internationale Anmeldenummer:
**PCT/EP2011/068830**

(87) Internationale Veröffentlichungsnummer:
**WO 2012/062589 (18.05.2012 Gazette 2012/20)**

(54) **HAFTKLEBEBÄNDER ZUR VERKLEBUNG VON FENSTERN INSBESONDERE IN MOBILGERÄTEN**

PRESSURE-SENSITIVE ADHESIVE TAPES FOR GLUING WINDOWS, IN PARTICULAR IN MOBILE DEVICES

RUBANS ADHÉSIFS DE CONTACT POUR LE COLLAGE DE FENÊTRES, EN PARTICULIER DANS DES APPAREILS MOBILES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.11.2010  DE 102010043881**

(43) Veröffentlichungstag der Anmeldung:
**18.09.2013  Patentblatt 2013/38**

(73) Patentinhaber: **tesa SE**
**22848 Norderstedt (DE)**

(72) Erfinder:
• **HUSEMANN, Marc**
**22559 Hamburg (DE)**
• **ELLRINGMANN, Kai**
**22589 Hamburg (DE)**
• **KUPSKY, Marco**
**25451 Quickborn (DE)**
• **MEYER, Claus**
**21079 Hamburg (DE)**

(74) Vertreter: **tesa SE**
**Hugo-Kirchberg-Straße 1**
**22848 Norderstedt (DE)**

(56) Entgegenhaltungen:
EP-A1- 1 520 896       WO-A1-2011/000716
US-A1- 2010 209 649

**Beschreibung**

Die Erfindung betrifft die Verwendung eines doppelseitigen Klebebands für die Verklebung von Fenstereinheiten in elektronischen Konsumgütern.

Nahezu alle Geräte der modernen Unterhaltungselektronik weisen visuelle Anzeigesysteme zur Anzeige des Betriebszustands des Geräts oder weiterer Informationen auf. Sind dabei komplexere Zusammenhänge darzustellen, so werden zur Anzeige häufig Anzeigemodule auf der Grundlage von Flüssigkristallen (LCD) oder von organischen Leuchtdioden (OLED) eingesetzt. Solche Anzeigen kommen etwa bei Digitalkameras, tragbaren Kleinstcomputern und Mobiltelefonen zum Einsatz.

Zum Schutz der Anzeigemodule vor einer etwaigen Beschädigung durch äußere mechanische Einwirkung wie zum Beispiel Stößen weisen derartige Anzeigesysteme üblicherweise transparente Schutzfenster auf, die die Außenseite der Anzeigemodule bedecken und so die Gefahr einer direkten Einwirkung auf das Modul vermindern. Ein derartiger Schutz ist ebenfalls bei nichtelektronischen visuellen Anzeigesystemen erforderlich, etwa bei mechanischen Anzeigen wie beispielsweise Uhren oder Füllstandsanzeigen an Vorratsgefäßen.

Als Schutzfenster werden üblicherweise Polymerscheiben (beispielweise aus Polycarbonat (PC), Polymethylmethacrylat (PMMA)) oder Glasscheiben eingesetzt, wobei jedes der beiden Systeme Vor- und Nachteile aufweist und daher entsprechend der konkreten Anwendung auszuwählen ist.

So sind Polymerscheiben zwar kostengünstig sowie leicht zu verarbeiten und bieten einen effizienten Schutz gegenüber mechanischen Einwirkungen, haben aber den Nachteil, dass sie üblicherweise nicht kratzfest sind und daher leicht beschädigt werden. Dies führt bereits nach kurzer Zeit nicht nur zu einer Verschlechterung des ästhetischen Eindrucks der Anzeigesysteme, sondern hat darüber hinaus auch eine verminderte Sicht auf den Anzeigebereich der Anzeigemodule zur Folge. Zudem sind viele gängige Polymere nur eingeschränkt gegenüber ultraviolettem Licht (UV-Licht) oder organischen Lösemitteln beständig.

Auf der anderen Seite sind Schutzfenster aus Glas inert gegenüber organischen Lösemitteln und infolge der großen Härte auch kratzbeständig, wodurch sie einen hochwertigen Eindruck vermitteln. Aufgrund der aus der Härte resultierenden Sprödigkeit dieses Materials ist Glas jedoch nur eingeschränkt als Schutz gegenüber mechanischen Einwirkungen wie Stoß oder Schlag geeignet, da es bereits bei schwachen Beanspruchungen zu einem splitternden Sprödbruch der Glasscheibe kommen kann. Neben der nur eingeschränkten Schutzwirkung ergibt sich demnach die Gefahr von Verletzungen durch die dabei entstehenden Splitter sowie die Gefahr einer Beschädigung des Anzeigemoduls durch scharfkantige Bruchstücke.

Die Befestigung von Display-Schutzfenstern im üblicherweise aus Kunststoff oder Metall bestehenden Gehäuse von elektronischen Geräten, insbesondere tragbaren Kleingeräten wie Mobiltelefonen und dergleichen, geschieht heutzutage hauptsächlich mittels doppelseitiger Klebebänder. Die doppelseitigen Haftklebebänder sind dabei regelmäßig auf das zu verklebende Material angepasst, so werden für die Verklebung von Gläsern üblicherweise Klebebänder eingesetzt, die ein gewisses Schockabsorptionsverhalten zeigen und somit mechanische Stöße abpuffern können, während es bei der Verklebung von Kunststoffen (Polymerscheiben) eher darauf ankommt, Biegespannungen zu kompensieren.

Die Hersteller derartiger elektronischer Kleingeräte sind daran interessiert, aus Praktikabilitäts- und Kostengründen ein einziges Klebeband einsetzen zu können, welches dann in der Lage ist, die positiven Eigenschaften aus den verschiedenen bisher eingesetzten Materialien gleichermaßen in sich zu vereinen.

Dem Fachmann stellte sich daher die objektive Aufgabe, ein Klebeband anzubieten, dass für die Verklebung sowohl von Glas als auch von transparenten Kunststoffen in Konsumgüterelektronikartikeln geeignet ist und gleichzeitig zum Schutz dieser Artikel vor äußeren Einflüssen beiträgt. Insbesondere sollte vorteilhaft eine Kompensation von Biegespannungen und ein gutes Schock-Absorptionsvermögen realisiert werden. Da Mobilgeräte teilweise Temperaturschwankungen und höheren Temperaturen ausgesetzt sind, sollte das Klebeband bevorzugt außerdem eine hohe Temperatur-Kohäsionsbeständigkeit besitzen.

Die US2010/209649 offenbart ein Doppelseitiges Klebeband, umfassend eine Trägerschicht sowie zwei außenliegende Haftklebemassenschichten auf Acrylbasis. Auch EP1520896 offenbart ein ähnliches Klebeband zur optischen Verklebung. WO2011/000716 offenbart die Verwendung von Haftklebebänder zur Verklebung optischer Bauteile (transparente Schutzfenster).

Es konnte überraschend festgestellt werden, dass ein Klebeband auf Basis von Acrylatpolymeren bei Verwirklichung eines bestimmten Vernetzungszustandes sowie bei Begrenzung des Harzanteils die gewünschte Eignung aufweist. Der Gegenstand des ersten Anspruchs betrifft daher die Verwendung eines doppelseitigen Klebebands einer Dicke von 100 bis 300 $\mu$m zur Verklebung von transparenten Bestandteilen umfassend eine Trägerschicht sowie zwei außenliegende Haftklebemassenschichten, wobei zumindest eine der Haftklebemassen der beiden Haftklebemassenschichten das Vernetzungsprodukt ist aus einer Polymermasse, die zumindest die folgenden Komponenten umfasst:

A) eine Polymerkomponente (Komponente A), umfassend 88 bis 100 Gew.-% eines oder mehrerer Polyacrylate (Komponente

A1) aus zumindest:

a) 1 bis 15 Gew.-%, bezogen auf die Komponente A1, eines oder mehrerer Monomere mit zumindest einer ethylenisch ungesättigten Bindung, die jeweils derart gewählt sind, dass die Glasübergangstemperaturen $T_G$ der entsprechenden Homopolymere aus dem jeweiligen Monomeren mindestens 0 °C betragen (Monomere a), wobei zumindest ein Teil der Monomere (a) weiterhin zumindest eine Carbonsäuregruppe aufweist (Monomere a1),

b) 85 bis 99 Gew.-%, bezogen auf die Komponente (A1), eines oder mehrerer Monomere aus der Gruppe der Acrylsäureester und Methacrylsäureester, die jeweils derart gewählt sind, dass die Glasübergangstemperaturen $T_G$ der entsprechenden Homopolymere aus dem jeweiligen Monomeren nicht mehr als -30 °C betragen (Monomere b)

B) zumindest einem kovalent vernetzenden bi- oder polyfunktionellem Vernetzer (Komponente B), wobei der zumindest eine Vernetzer in einer Menge zugegen ist, dass das Mengenverhältnis $V = n_Z/n_P$ der Stoffmenge $n_Z$ der vernetzungsaktiven Zentren des Vernetzers zu der theoretischen Stoffmenge $n_P$ der Makromoleküle der Polymerkomponente A1 einen Wert zwischen 0,15 und 0,60 besitzt, wobei sich die Stoffmenge $n_Z$ der vernetzungsaktiven Zentren des Vernetzers ergibt aus der mit der Anzahl f der vernetzungsaktiven Zentren pro Vernetzermolekül multiplizierten Masse $m_V$ des Vernetzers geteilt durch die Molmasse $M_V$ des Vernetzers, also $n_Z = f \cdot m_V/M_V$, und die theoretische Stoffmenge $n_P$ der Makromoleküle der Polymerkomponente A1 sich ergibt aus der Masse $m_P$ der Polymerkomponente in der Haftklebemasse geteilt durch die zahlenmittlere Molmasse $M_{n,P}$ dieser Komponente, also $n_P = m_P/M_{n,P}$.

Erfindungsgegenstand sind weiter vorteilhafte Ausgestaltungen einer solchen Verwendung der entsprechenden Klebebänder für die Verklebung von Komponenten von Konsumgüterelektronikartikeln, insbesondere von Display-Fenstern in derartigen Artikeln.

Schließlich betrifft die Erfindung die Polymermasse zur Herstellung einer Haftklebemassse für das erfindungsgemäße Klebeband. Alle Ausführungen zur vernetzten Haftklebemasse in dieser Schrift, insbesondere zu den Komponenten und deren Zusammensetzung, gelten für die unvernetzte Polymermasse entsprechend. Gleiches gilt umgekehrt.

Die Haftklebemasse für das Klebeband ist das Vernetzungsprodukt aus einer Polymermasse, die zumindest eine Polymerkomponente A und einen Vernetzer B umfasst. In der einfachsten Realisierung der Erfindung beschränkt sich die Haftklebemasse auf das Vernetzungsprodukt nur dieser beiden Komponenten (so dass die Komponenten A und B in Summe 100 % der Polymermasse vor der Vernetzung ausmachen). Die Angabe von 100 Gew.-% erfolgt unbeschadet von Verunreinigungen in üblichen, geringen Anteilen, beispielsweise bis zu 3 Gew.-%, da diese auf die Erzielung der gewünschten Eigenschaften keinen wesentlichen Einfluss haben. Nach Möglichkeit sollten Verunreinigungen jedoch weitgehend reduziert (beispielsweise bis unter 1 Gew.-%) und im besten Fall ausgeschlossen werden.

Als Verunreinigungen werden hier und im folgenden derartige Verbindungen bezeichnet, die unbeabsichtigt in das jeweilige System eingetragen werden (beispielsweise zusammen mit den zugegebenen Monomeren) und nicht unter die Definition der Komponenten fallen, die beabsichtigter Weise vorgesehen sind.

Durch die Feinjustierung zwischen Vernetzermenge und Polyacrylatkomponente A1 und eine darauf abgestimmte maximale Harzmenge sollte die Haftklebemasse nicht mehr als 5 Gew-%, bevorzugt nicht mehr als 3 Gew.-% weitere Komponenten C umfassen, die nicht von den Definitionen der Komponenten A und B umfasst sind, so dass die Komponenten A und B in Summe mindestens 95 Gew.-%, besser mindestens 97 Gew.-% der Polymermasse zur Herstellung der vernetzten Haftklebemasse ausmachen.

Falls im Einzelfall gewünscht, können der Haftklebemasse Additive (Komponente C) wie Weichmacher (Plastifizierungsmittel), Füllstoffe (z. B. Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, z. B. in Form von primären und sekundären Antioxidantien oder in Form von Lichtschutzmitteln zugesetzt werden. Für die Erfindung ist es jedoch von Vorteil, wenn auf jede einzelne, beliebige Kombinationen oder die Gesamtheit dieser Additive verzichtet wird, da die Haftklebemasse ohne die Additive bezüglich der gewünschten Eigenschaften bereits feinjustiert ist. Insbesondere sollte der Anteil der der Klebemasse optional zugesetzten Additive 5 Gew,-%, bevorzugt 3 Gew.-% nicht überschreiten.

Als Additive im vorstehenden Sinne werden weitere Harze entsprechend der Komponente A2 nicht angesehen.

Die folgenden Ausführungen gelten sowohl für die Haftklebemasse, die ausschließlich auf den beiden Komponenten A und B basiert, als auch auf die Weiterentwicklungen bzw. Abwandlungen.

Eigenschaften des Haftklebebandes und der zugrundeliegenden Haftklebemasse

Zur Erzielung von guten haftklebrigen Eigenschaften der vernetzten Polymere wird die mengenmäßige Zusammensetzung der eingesetzten Komponenten vorteilhaft derart gewählt, dass sich in Analogie zur Fox-Gleichung ein geeigneter Glasübergangspunkt $T_G$ für das Polymer ergibt.

Das Haftklebeband lässt sich hervorragend über die Bestimmung der viskoelastischen Eigenschaften der Haftklebemasse mittels rheologischer Untersuchungen charakterisieren.

Beaufschlagt man eine Probe mit einer sinusförmigen Beanspruchung, wie dies zum Beispiel bei der dynamisch mechanischen Analyse (DMA) der Fall ist, so sind die charakteristischen Eigenschaften der Probe, die sich aus deren viskoelastischen Charakter ergeben, zum einen Abhängig von der Frequenz der Sinusfunktion, also der Zeit, die jede Beanspruchungsstufe einwirkt, andererseits auch von der Temperatur. Beide Einflussgrößen stehen dabei in Wechselwirkung miteinander. So lässt sich für den Glasübergangspunkt, also den Zustand, in dem das Polymermaterial die größte Veränderung der Verformungsfähigkeit aufweist (Übergang von dem glasartigen, spröden in den weichen, entropieelastischen Bereich), bei Einwirkung einer Belastung mit einer konstanten Frequenz und kontinuierlicher, linearer Variation der Temperatur (Temperatursweep) eine charakteristische Glasübergangstemperatur $T_G$ finden; bei Einwirkung einer Belastung bei konstanter Temperatur und stetiger Änderung der Frequenz (Frequenzsweep) kann eine charakteristische Glasübergangsfrequenz $f_G$ ermittelt werden. In der Praxis lässt sich zur Ermittlung der Glasübergangsfrequenz $f_G$ hervorragend das sogenannte Time-Temperatur-Superposition-Verfahren (TTS) anwenden, wobei in regelmäßigen Temperaturabständen durchgeführte Frequenzmessungen zu einem Frequenzsweep verrechnet werden und hierdurch der durch die Messungen zugängliche Bereich um mehrere Dekaden nach unten und nach oben erweitert werden kann.

Für die im Haftklebeband eingesetzte Haftklebemasse sollte die Glasübergangstemperatur (dynamische Messung bei 10 rad/s, DMA; siehe hinten) vorteilhaft nicht mehr als - 11 °C, bevorzugt nicht mehr als - 15 °C betragen.

Für gute Repulsionseigenschaften der Haftklebemasse ist es von Vorteil, wenn die Haftklebemasse Energie gut dissipieren kann. Dies zeigt sich in vorteilhaft in einem günstigen Verlustfaktor tan δ (Verhältnis zwischen Verlustmodul G" und Speichermodul G'). Dabei beschreibt das Speichermodul G' die elastischen Eigenschaften und das Verlustmodul G" die viskosen Eigenschaften eines viskoelastischen Systems wie hier einer Haftklebemasse, so dass die Viskoelastizität dieses Systems mit einem einzigen Werkstoffkennwert charakterisiert werden kann. Die Werte sind beispielsweise über Dynamisch-Mechanische Analyse (DMA) zugänglich (siehe hinten, Abschnitt "Messmethoden"). Angaben zum Verlustfaktor tan δ (sowie zum Verlustmodul G" und zum Speichermodul G') beziehen sich auf diese Messung, sofern im Einzelfall nichts anderes angegeben ist.

Sehr vorteilhaft liegt der Verlustfaktor tan δ bei 0,1 rad/s und 85 °C in einem Bereich von 0,35 bis 0,75, bevorzugt im Bereich von 0,40 bis 0,65, besonders bevorzugt von 0,41 bis 0,60.

Es konnte festgestellt werden, dass sich das Schockabsorptionsvermögen durch die Glasübergangsfrequenz $f_G$ charakterisieren lässt. Zur Erzielung der gewünschten Eigenschaften, insbesondere des Schockabsorptionsvermögens, des Haftklebebandes ist es sehr vorteilhaft, wenn die Glasübergangsfrequenz bei 25 °C (zu den Angaben siehe hinten, Abschnitt "Messmethoden") mehr als 5000 rad/s beträgt. Es hat sich herausgestellt, dass insbesondere Haftklebemassen, deren Glasübergangsfrequenz oberhalb dieser Grenze liegt, befähigt sind, Schockenergie aus kurzen, starken Stoßeinwirkungen, wie dies zum Beispiel beim Aufprall nach einem Sturz der Fall ist, zu dissipieren.

Es hat sich herausgestellt, dass auch mittels der sogenannten "Rolling-Ball-Tack"-Messung Rückschlüsse auf das Schockabsorptionsvermögen möglich sind. Üblicherweise wird dieser Test eingesetzt, um die Anfassklebrigkeit einer Haftklebemasse zu charakterisieren. Ein gutes Schockabsorptionsvermögen konnte in der Regel für die Proben festgestellt werden, bei denen der Rolling-Ball-Test zu einem Ergebnis von weniger als 50 mm führt.

Komponente A1 / Polyacrylat

Die Polymerkomponente A umfasst ihrerseits 88 Gew-%, bevorzugt 90 Gew.-% oder mehr, bis einschließlich 100 Gew.-% eines oder mehrerer Polyacrylate (Komponente A1). Die Polymerkomponente A kann also ausschließlich aus der Polyacrylatkomponente A1 bestehen, optional können aber auch bis zu 10 Gew.-% einer oder mehrerer weiterer Komponenten anwesend sein. Diese weitere Komponente kann beispielsweise ganz oder zum Teil eine Harzkomponente (Komponente A2) sein (siehe unten). So kann sich die Polymerkomponente A ausschließlich aus der Polyacrylatkomponente A1 und der Harzkomponente A2 zusammensetzen, aber auch bei Anwesenheit einer Harzkomponente A2 kann die Polymerkomponente A neben der Polyacrylatkomponente A1 noch eine oder mehrere weitere Komponenten (A3, A4 ...) enthalten.

Die Angabe von 100 Gew.-% erfolgt auch hier unbeschadet von Verunreinigungen in üblichen, geringen Anteilen, beispielsweise bis zu 3 Gew.-%, da diese auf die Erzielung der gewünschten Eigenschaften keinen wesentlichen Einfluss haben. Nach Möglichkeit sollten Verunreinigungen jedoch weitgehend reduziert (beispielsweise bis unter 1 Gew.-%) und im besten Fall ausgeschlossen werden.

Die Polyacrylatkomponente A1 ihrerseits umfasst erfindungsgemäß

a) 1 Gew.-%, bevorzugt 3 Gew.-%, bis 15 Gew.-%, bezogen auf die Komponente A1, eines oder mehrerer Monomere mit zumindest einer ethylenisch ungesättigten Bindung, die jeweils derart gewählt sind, dass die Glasübergangstemperaturen $T_G$ der entsprechenden Homopolymere aus dem jeweiligen Monomeren mindestens 0 °C betragen (Monomere a),
wobei zumindest ein Teil der Monomere (a) weiterhin zumindest eine Carbonsäuregruppe aufweist (Monomere a1),
b) 85 Gew.-% bis 99 Gew.-%, bevorzugt bis 97 Gew.-%, bezogen auf die Komponente (A1),
eines oder mehrerer Monomere aus der Gruppe der Acrylsäureester und Methacrylsäureester, die jeweils derart gewählt sind, dass die Glasübergangstemperaturen $T_G$ der entsprechenden Homopolymere aus dem jeweiligen Monomeren nicht mehr als -30 °C betragen (Monomere b).

Die Angaben der Glasübergangstemperaturen $T_G$ beziehen sich auf die Bestimmung mittels dynamisch mechanischer Analyse (DMA) bei geringen Frequenzen (siehe hinten; Abschnitt "Messmethoden"), sofern im Einzelfall nichts anderes angegeben ist.
Vorteilhaft machen die Komponente a und die Komponente b in Summe 100 % an der Polyacrylatkomponente A1 aus, setzt sich die Polyacrylatkomponente A also ausschließlich aus diesen Komponenten zusammen. Die Angabe von 100 Gew.-% erfolgt wiederum unbeschadet von Verunreinigungen in üblichen, geringen Anteilen, beispielsweise bis zu 3 Gew.-%, da diese auf die Erzielung der gewünschten Eigenschaften keinen wesentlichen Einfluss haben. Nach Möglichkeit sollten Verunreinigungen jedoch weitgehend reduziert (beispielsweise bis unter 1 Gew.-%) und im besten Fall ausgeschlossen werden.
Es ist jedoch auch möglich, dass sich die Anteile der Komponenten a und b an der Komponente A1 zu weniger als zu 100 Gew.-% addieren. , Die Polyacrylatkomponente A umfasst dann eine oder mehrere weitere Komponenten c, d, ... (Comonomere c, d, ...), in Summe bis zu einem Gewichtsanteil (bezogen auf 100 Gew.-% der Polyacrylatkomponente A1) von maximal 12 Gew.-%, bevorzugt von maximal 10 Gew.-%.
Als Comonomere c, d, ... lassen sich die üblichen, dem Fachmann bekannten Comonomere für Polyacrylate einsetzen.
In sehr vorteilhaft Weise beträgt der Anteil der Monomere a1 an der Polyacrylatkomponente A1, also der Anteil der Monomere, die zumindest eine Carbonsäuregruppe aufweisen, 3 bis 5 Gew.-% (bezogen auf die Polyacrylatkomponente A1). Ein Anteil von mindestens 3 Gew.-% carbonsäuregruppenhaltiger Monomere sorgt für eine signifikante Reaktivitätserhöhung bezüglich des zugesetzten Vernetzers und führt zu guten Reaktionsgeschwindigkeiten des Vernetzungsprozesses.
Monomere im Sinne der Komponente a1 mit zumindest einer ethylenisch ungesättigten Bindung, die derart gewählt sind, dass die Glasübergangstemperaturen $T_G$ der entsprechenden Homopolymere mindestens 0° C betragen, und die zumindest eine Carboxylgruppe aufweisen, werden bevorzugt gewählt aus der Gruppe umfassend Acrylsäure und/oder Methacrylsäure, wobei Acrylsäure besonders bevorzugt eingesetzt wird.
Die Komponente A1 kann ausschließlich als Monomere a solche des Typs a1 umfassen, die Komponente a kann aber auch durch einen Teil Monomere des Typs a1 und einen Teil an weiteren Comonomeren ai zusammengesetzt sein, die jeweils derart gewählt sind, dass die Glasübergangstemperaturen $T_G$ der entsprechenden Homopolymere aus dem jeweiligen Monomeren mindestens 0 °C betragen, die aber keine Carbonsäuregruppe aufweisen.
Im Sinne der Comonomere ai lassen sich hervorragend ganz oder teilweise Monomere a2 einsetzen, die gewählt sind aus der Gruppe der Verbindungen mit zumindest einer ethylenisch ungesättigten Bindung, und zwar derart, dass die Glasübergangstemperaturen $T_G$ der entsprechenden Homopolymere aus dem jeweiligen Monomeren a2 mindestens 0 °C betragen, wobei die Monomere a2 weiterhin zumindest eine Estergruppe mit einem Ethyl- und/oder Methylrest aufweist. Insbesondere handelt es sich um Acrylsäure- und/oder Methacrylsäureester, so dass die Gruppe a2 dann Acrylsäuremethylester, Acrylsäureethylester, Methacrylsäuremethylester und Methacrylsäureethylester umfasst. Mittels der Monomere a2 lässt sich die Polarität der Haftklebemasse beeinflussen. Für die beabsichtigte Anwendung ergibt sich dahingehend ein Vorteil, als dass eine Eignung zur Verklebung von Materialien wie Glas, Polymethylmethacrylat (PMMA), Polyethylenterephthalat (PET), Polycarbonat (PC) und dergleichen gegeben sein soll, die selbst mehr oder weniger stark polar sind. Um die Adhäsion zu derartigen Substraten zu verbessern, kann es vorteilhaft sein, wenn polare Comonomere wie die vorgenannte Verbindungsklasse eingesetzt wird, die über Van-der-Waals-Kräfte und/oder Dipol-Dipol-Wechselwirkungen die Haftung der Klebmasse auf dem Substrat erhöhen können. Wird die Komponente a2 allerdings in einer sehr hohen Menge eingesetzt, leidet in der Regel die Schockabsorptionsfähigkeit der Masse, das polare Monomere üblicherweise korrespondierende Homopolymere mit hohen Glasübergangstemperaturen besitzen und die Haftklebemasse daher zu hart und spröde wird. Es ist daher vorteilhaft, nicht mehr als 10 Gew.-% der Monomere a2 als Comonomere einzusetzen.
Die Komponente A1 kann ausschließlich als Monomere a solche des Typs a1 und a2 umfassen, die Komponente a kann aber auch durch einen Teil Monomere des Typs a1, einen Teil Monomere des Typs a2 und einen Teil an weiteren Comonomeren des Typs a3 zusammengesetzt sein, der unter die Definition für die Monomere a, aber nicht unter die Definition des Typs a1 und des Typs a2 fällt. Die Comonomere des Typs a3 tragen weder eine Carbonsäuregruppe noch eine Estergruppe mit einem Ethyl- und/oder Methylrest. Es ist auch möglich, dass die Komponente A1 ausschließlich als Monomere a solche des Typs a1 und a3 umfasst.

Monomere des Typs a3 können insbesondere hilfreich sein, um die Glasübergangstemperatur und/oder die Glasübergangsfrequenz der resultierenden Haftklebemasse in Richtung auf den letztlich angestrebten Wert zu regulieren.

Als Monomere a3 lassen sich beispielsweise und ohne Anspruch auf Vollständigkeit folgende Monomere einsetzen: Benzylacrylat, Benzylmethacrylat, Phenylacrylat, Phenylmethacrylat, Isobornylacrylat, Isobornylmethacrylat, t-Butylphenylacrylat, t-Butylaphenylmethacrylat, Cyclohexylmethacrylat, 3,3,5-Trimethylcyclohexylacrylat, 4-Biphenylacrylat, 4-Biphenylmethacrylat, 2-Naphthylacrylat, 2-Naphthylmethacrylat, Phenoxyethylacrlylat, Phenoxy-ethylmethacrylat, Dimethylaminopropylacrylamid, Dimethylaminopropyl-methacrylamid, weiterhin N,N-Dialkyl-substituierte Amide, wie beispielsweise N,N-Dimethylacrylamid, Acrylnitril, Vinylether, wie Vinylmethylether, Ethylvinylether, Vinylisobutylether, Vinylester, Styrol, a- und p-Methylstyrol, Makromonomere wie 2-Polystyrolethylmethacrylat (Molekulargewicht Mw von 4000 bis 13000 g/mol), Poly(Methylmethacrylat)ethylmethacrylat (Mw von 2000 bis 8000 g/mol).

Es ist vorteilhaft, wenn die Komponente a2, die Komponente a3 oder die Summe der Komponenten a2 und a3 bis zu 12 Gew.-%, insbesondere bis zu 10 Gew.-% an der Komponente A1 ausmacht, insbesondere wenn die Komponente a1 einen Anteil von 3 bis 5 Gew.-% an der Komponente A1 ausmacht.

Die Polyacrylatkomponente A1 umfasst weiterhin zu 85 bis 99 Gew.-% eines oder mehrerer Monomere b, wobei die Monomere b gewählt sind aus der Gruppe der Acrylsäureester und der Methacrylsäureester, mit der Maßgabe, dass die Glasübergangstemperatur $T_G$ der entsprechenden Homopolymeren aus einem jeweiligen Monomeren b nicht mehr als - 30 °C betragen soll.

Als Monomere im Sinne der Komponente b lassen sich beispielweise ganz oder teilweise, insbesondere auch in Kombination mit den nachgenannten Monomeren, Ester der Acrylsäure einsetzen, bei denen die Alkylgruppe linear ist, und mindestens 3 C-Atome aufweist, bevorzugt bis zu 14 C-Atomen. Insbesondere vorteilhaft lassen sich Acrylsäurester mit linearen Alkylresten mit 4 bis 9 Kohlenstoffatomen einsetzen. Bevorzugt werden für die vorgenannten Monomere unsubstituierte Acrylsäureester eingesetzt. Beispielhaft genannte Monomere sind Propylacrylat, n-Butylacrylat, n-Pentylacrylat, n-Hexylacrylat, n-Heptylacrylat, n-Octylacrylat, n-Nonylacrylat, n-Decylacrylat, n-Undecylacrylat, n-Dodecylacrylat, n-Tridecylacrylat, n-Tetradecylacrylat. Weiterhin lassen sich für die Komponente b allein oder als Comonomere Acrylsäureester mit verzweigten und/oder durch funktionelle Gruppen substituierten Kohlenwasserstoffresten einsetzen, sofern die Bedingung für die Glasübergangstemperatur erfüllt ist. Auch für diese Monomere seinen beispielhaft und ohne Anspruch auf Vollständigkeit einige vorteilhaft einzusetzende Monomere genannt:
2-Heptylacrylat, 2-Octylacrylat, 2-Ethoxyethylacrylat, 2-Ethylhexylacrylat, 2-Ethylbutylacrylat, 3-Methoxybutylacrylat, 2-Methoxyethylacrylat, 3-Methoxypropylacrylat, 3-Methylbutylacrylat, Isodecylacrylat.

Auch eine Reihe von Methacrylsäureestern lässt sich gut im Sinne der Komponente b) einsetzen, wobei wiederum die $T_G$-Bedingung zu beachten ist. Beispiele für derartige Monomere sind Octadecylmethacrylat, Decylmethacrylat, Dodecylmethacrylat.

Die vorgenannten sowie weitere Monomere, die eine Glasübergangstemperatur von nicht mehr als - 30 °C aufweisen, können jeweils allein oder in Kombination mit einem oder mehreren weiteren Monomeren dieser Art eingesetzt werden. So ist beispielsweise die Kombination von n-Butylacrylat und Ethylhexylacrylat eine gute Monomermischung für die Komponente b.

## Herstellung der Polyacrylatkomponente A1

Die Polyacrylatkomponente A1 lässt sich durch Polymerisation aus den genannten Komponenten nach den üblichen, dem Fachmann bekannten Verfahren herstellen, insbesondere durch radikalische Polymerisation. Die Polymerisation wird bevorzugt derart geführt, dass das zahlenmittlere Molekulargewicht $M_n$ des resultierenden Polymers mindestens 50.000 g/mol beträgt. Ein Wert von 250.000 g/mol für das zahlenmittlere Molekulargewicht $M_n$ sollte bevorzugt nicht überschritten werden. Sehr bevorzugt liegt das zahlenmittlere Molekulargewicht $M_n$ der Polyacrylatkomponente A1 in einem Bereich zwischen 50.000 g/mol und 150.000 g/mol. Alle Angaben zu Molekulargewichten von Polymeren beziehen sich auf die Messung mittels Gelpermeationschromatographie; siehe hinten, Abschnitt "Messmethoden".

## Komponente A2/ Harze

Optional kann die Polymerkomponente A bis zu 12 Gew.-%, bevorzugt bis zu 10 Gew.-%, einer Harzkomponente (Komponente A2), umfassend eines oder mehrere Harze enthalten. Als Harze im Sinne dieser Schrift werden oligo- und polymere Verbindungen mit einem zahlenmittleren Molekulargewicht $M_n$ von nicht mehr als 5.000 g/mol angesehen (Gelpermeationschromatographie, siehe hinten). Insbesondere hat der überwiegende Teil der Harze (bezogen auf den Gewichtsteil an der gesamten Harzkomponente), bevorzugt haben alle Harze einen Erweichungspunkt von 80 bis 150 °C. Die Angaben zum Erweichungspunkt $T_E$ von polymeren Verbindungen erfolgen in Bezug auf mittels des Ring-Kugel-Verfahrens gemäß DIN EN 1427:2007 bestimmte Werte (siehe hinten, Abschnitt "Messmethoden"), sofern im Einzelfall nichts anderes angegeben ist.

Ein Harz-Anteil von mehr als 12 Gew.-% an der Polymerkomponente sollte vermieden werden, da sich derart hohe Harzanteile negativ auf die Schockabsorptionseigenschaften auswirken. Bevorzugt übersteigt der Harzanteil 10 Gew.-% nicht.

Im Sinne der Harzkomponente A2 lassen sich natürliche und/oder synthetische Harze einsetzen. Prinzipiell lassen sich alle Harze verwenden, deren Erweichungspunkt im genannten Temperaturbereich liegt. Geeignete Klebharze umfassen unter anderem Kolophonium und Kolophoniumderivate (Kolophoniumester, auch durch z. B. Disproportionierung oder Hydrierung stabilisierte Kolophoniumderivate), Polyterpenharze, Terpenphenolharze, Alkylphenolharze, aliphatische, aromatische und aliphatisch-aromatische Kohlenwasserstoffharze, um nur einige zu nennen. Sehr bevorzugt werden Harze gewählt, die mit der Polyacrylatkomponente verträglich (in ihr löslich bzw. mit ihr homogen mischbar) sind.

Die Beimischung einer Harzkomponente kann vorteilhaft zur Regulierung des Glasübergangsbereiches der Haftklebemasse (als Ganzes) eingesetzt werden. Weiterhin trägt die Beimischung eines oder mehrerer Harze häufig dazu bei, dass Energie besser dissipiert werden kann, somit kann eine Harzbeimischung zur Feinjustierung des Verlustfaktors genutzt werden.

Komponente B / Vernetzer

Zur Vernetzung der Haftklebemasse ist dem zu vernetzenden Polyacrylat-System zumindest ein bi- oder polyfunktioneller Vernetzer (Komponente B) in der definierten Menge zugesetzt. Der Vernetzer ist in der Lage, über die Carbonsäuregruppen des Polyacrylates (Eingeführt mittels der Komponente a1) Verknüpfungsstellen aufzubauen. Erfindungsgemäß ist der (bzw. bei mehreren Vernetzern sind die) Vernetzer in einer Menge zugesetzt, dass das Verhältnis V im Bereich von 0,15 bis 0,60 liegt. Bevorzugt beträgt der Wert V 0,2 oder mehr, insbesondere liegt er im Bereich von 0,22 bis 0,58.

Erfindungsgemäß können auch mehrere Vernetzer eingesetzt werden. Wenn mehrere Vernetzer, insbesondere auch unterschiedlicher Funktionalität, verwendet werden, ist in die in Anspruch 1 angegebene Definition für das Verhältnis V anzusetzen:

$V = n_Z/n_P$, wobei $n_Z$ die über alle Vernetzer summierte Stoffmenge der vernetzungsaktiven Zentren ergibt:

$$n_Z = f_1 \cdot m_{V,1}/M_{V,1} + f_2 \cdot m_{V,2}/M_{V,2} \ldots$$

wobei der Index 1 die Werte des ersten Vernetzers, 2 die des zweiten Vernetzers usw. bedeutet.

Nach Kenntnis des zahlenmittleren Molekulargewichts (GPC) der Polymerprobe lässt sich die zuzusetzende Vernetzermenge gemäß des Hauptanspruchs bei Kenntnis des mittleren Molekulargewichts des Vernetzers und dessen Funktionalität leicht ermitteln. Sofern nur ein Vernetzer vorliegt, ergibt sich die Einwaage des vorteilhaft eingesetzten Vernetzers $m_V$ mit den eingeführten Definitionen der entsprechenden Werte aus der Einwaage der Polymerkomponente $m_P$ und deren zahlenmittlerer Molmasse $M_{n,P}$ wie folgt ($M_V$ = Molekulargewicht des Vernetzers):

$$m_V = \frac{V \cdot m_P \cdot M_V}{M_{n,P} \cdot f}$$

Liegen mehrere Vernetzer vor, insbesondere mit unterschiedlichen Funktionalitäten, so muss diese Formel entsprechend angepasst werden.

Für die vernetzte Haftklebemasse ergibt sich in guter Näherung eine Vernetzungsdichte, die im Mittel 0,15 bis 0,60 Vernetzungsstellen pro Makromolekül der Polymerkomponente entspricht, insbesondere wenn die Vernetzungsreaktion bis zu einem weitgehend vollständigen Umsatz durchgeführt wird.

Der bzw. die Vernetzer sind kovalent vernetzende Vernetzer, die mit Carboxylgruppen reagieren können. Als Vernetzerkomponente wird insbesondere vorteilhaft ein chemisch bindendes (kovalent vernetzendes) System gewählt, um eine hinreichende Temperaturbeständigkeit zu gewährleisten (in mit nicht chemisch bindenden Vernetzern, zum Beispiel Chelatbernetzern, vernetzten Massen würden die Verknüpfungsstellen bei hohen Temperaturen wieder aufgehen, so dass das System seine Kohäsionseigenschaften verlieren würde). Der Vernetzer ist also insbesondere ein solcher, welcher in der Lage ist, über die Carbonsäuregruppen kovalente Bindungen mit den Makromolekülen des Polyacrylats einzugehen; wobei pro Funktionalität des Vernetzermoleküls jeweils eine Verknüpfungsstelle geschaffen werden kann [ein bifunktioneller Vernetzer kann somit zwei Makromoleküle über zwei Verknüpfungsstellen miteinander verbinden, ein trifunktioneller Vernetzer drei Makromoleküle über drei Verknüpfungsstellen (jeweils mittels einer Carbonsäuregruppe pro Makromolekül) oder zwei Makromoleküle über drei Verknüpfungsstellen (mittels einer Carbonsäuregruppe eines Makromoleküls und zwei Carbonsäuregruppen des zweiten Makromoleküls) usw.]. Es hat sich als sehr vorteilhaft herausgestellt, wenn eine Vernetzungsdichte realisiert wird, die im Mittel pro Makromolekül der Polymerkomponente 0,15 bis 0,6, insbesondere 0,22 bis 0,58 Vernetzungsstellen entspricht. Hierfür ist es insbesondere vorteilhaft, wenn die Vernetzungsreaktion möglichst weitgehend in Richtung auf einen vollständigen Umsatz durchgeführt wird (bevorzugt > 90 %, mehr bevorzugt > 95 %). Mit dem vorteilhaft realisierten Vernetzungsgrad ist die Kohäsion der vernetzten Masse hoch genug, damit sie unter Biegebeanspruchung nicht spaltet, aber auch niedrig genug, dass es unter Biegebeanspruchung nicht zu einem adhäsiven Versagen der Masse kommt (Vermeidung der Übervernetzung durch geeignete Wahl der Zahl der Vernetzungsstellen).

Vorteilhaft wird der bzw. werden die Vernetzer derart ausgewählt, dass sie unter normalen Lagerbedingen, denen die unvernetzten Haftklebemassen häufig unterworfen sind, keine signifikanten Reaktionen mit Hydroxyfunktionen und/oder insbesondere mit Wasser eingehen. Hierdurch können Reaktivitätsverminderungen durch derartige Reaktionen vermieden werden, wie dies häufig bei dem Einsatz von Vernetzern wie Isocyanat der Fall ist.

Sehr geeignete Vernetzer sind solche mit drei- oder vier funktionellen Gruppen pro Vernetzermolekül (tri- und tetrafunktionale Vernetzer). Als besonders geeignete Vernetzer, die auch gut lagerfähig sind, haben sich solche chemischen Verbindungen herausgestellt, die sowohl Epoxy- als auch Amingruppen in sich tragen. Besonders gut geeignete derartige Vernetzer haben beispielweise mindestens eine Amingruppe und mindestens zwei Epoxygruppen im Molekül, sehr effektivere Vernetzer haben beispielsweise zwei Amingruppen und vier Epoxygruppen. Als hervorragend geeigneter Vernetzer hat sich N,N,N',N'-Tetraglycidyl-meta-Xylenediamin (CAS No. 63738-22-7) herausgestellt. Weiterhin sehr gut geeignet ist 1,3-bis(N,N-diglycidylaminomethyl)cyclohexane (CAS No. 65992-66-7). Diese Vernetzer mit Epoxy- und Amingruppen im Molekül zeichnen sich durch lange Beständigkeit (mögliche Verarbeitungszeit, "Topfzeit") der Vernetzerlösung aus, zwegen keine Reaktivitätsverminderung durch Reaktionen mit Wasser und sind dennoch durch eine hohe Vernetzungsgeschwindigkeit gekennzeichnet. Mittels dieser Vernetzer ist es weiterhin möglich, definierte Vernetzungsgrade im Zielbereich dieser Schrift zu realisieren, ohne dass es bei Lagerung der vernetzten Produkte zu signifikanter Nachvernetzung kommt.

Um die bestmögliche Vernetzung zu gewährleisten, ist es von Vorteil, wenn außer den ausgewählten kovalent vernetzenden keine weiteren, durch andere Vernetzungsmechanismen reagierenden Vernetzer zugegen sind (wie beispielwiese Chelatvernetzer).

Zusammenfassung der Komponenten der Haftklebemasse (zum Zwecke der Übersichtlichkeit):

| | |
|---|---|
| Komponente A: | Polymerkomponente |
| Komponente B: | Vernetzer (bi- oder polyfunktionell) |
| Komponente A1: | Polyacrylatkomponente; Teilkomponente der Komponente A |
| Komponente A2: | Harzkomponente; optionale Teilkomponente der Komponente A |
| Komponenten A3, A4,...: | optionale Teilkomponenten der Komponente A |
| Komponente a (gebildet aus Monomeren a): | Teilkomponente der Polyacrylatkomponente A1 [Monomere mit zumindest einer ethylenisch ungesättigten Bindung, die jeweils derart gewählt sind, dass die Glasübergangstemperaturen $T_G$ der entsprechenden Homopolymere aus dem jeweiligen Monomeren mindestens 0 °C betragen] |
| Komponente b (gebildet aus Monomeren b): | Teilkomponente der Komponente A1 [(Meth-)Acrylsäureester, die jeweils derart gewählt sind, dass die Glasübergangstemperaturen $T_G$ der entsprechenden Homopolymere aus dem jeweiligen Monomeren höchstens - 30 °C betragen] |
| Komponenten c, d, .... | optionale Teilkomponenten der Komponente A1 |
| Komponente a1 (gebildet aus Monomeren a1): | Teilkomponente der Komponente a [aufweisend eine oder mehrere Carbonsäuregruppen] |
| Komponente a2 (gebildet aus Monomeren a2): | optionale Teilkomponente der Komponente a [aufweisend zumindest eine Estergruppe mit einem Ethyl- und/oder Methylrest] |
| Komponente a3 (gebildet aus Monomeren a3): | optionale Teilkomponente der Komponente a [ohne Carbonsäuregruppe und ohne Estergruppe mit Ethyl- oder Methylrest] |

In der vorstehenden Auflistung soll der Begriff "Teilkomponente" einen 100%-Anteil an dieser Komponente sprachlich nicht ausschließen.

Trägerfolie

Als Trägermaterial für das Klebeband wird vorteilhaft eine Kunststofffolie, besonders bevorzugt eine Folie aus PET (Polyethylenterephthalat) eingesetzt. Die Schichtdicke der Trägerfolie beträgt bevorzugt 4 bis 50 $\mu$m. Die Trägerfolie dient insbesondere als Stabilisierungsfolie für das Klebeband, um ein Konfektionieren, insbesondere ein Ausstanzen von flächigen Formteilen (Klebebandab- bzw. -ausschnitten, sogenannten "Stanzlingen") zu erleichtern bzw., je nach Beschaffenheit (Kohäsion) der Haftklebemasse, erst zu ermöglichen. Des weiteren bewirkt die Folie eine bessere, erleichterte Entfernbarkeit (Wiederablösbarkeit) des verklebten Klebebandes von einem Substrat.

Klebebandaufbau

Die Haftklebebänder haben eine Dicke im Bereich von 100 bis 300 $\mu$m. Die Trägerfolie kann dabei symmetrisch oder asymmetrisch zwischen den Haftklebemassenschichten angeordnet sein. Bevorzugt werden Trägerfolien mit einer Dicke im Bereich von 4 bis 50 $\mu$m eingesetzt. Es ist vorteilhaft, wenn die Trägerdicke derart ausgewählt ist, dass sie nicht mehr als 20 %, insbesondere nicht mehr als 10% der Gesamtdicke des Haftklebebandes ausmacht, damit der Trägeranteil an der Klebebanddicke nicht zu hoch ist und die gewünschten, auf die Haftklebemasse zurückzuführenden Eigenschaften des Klebebandes zur Wirkung kommen können .

Es ist von Vorteil, wenn das Haftklebeband geometrisch symmetrisch aufgebaut ist, also die Haftklebemassenschichten auf beiden Seiten der Trägerfolie gleich dick gestaltet sind.

Es ist weiterhin von Vorteil, insbesondere in Kombination mit der geometrischen Symmetrie, wenn die Haftklebemassen auf beiden Seiten des erfindungsgemäßen Klebebandes chemisch identisch sind, wenn also auf beiden Seiten eine Haftklebemasse eingesetzt wird, wie sie vorstehend in der Grundform oder einer ihrer Ausführungsvarianten dargestellt ist.

Als ein besonders vorteilhaftes Klebeband hat sich ein solches herausgestellt, welches chemisch und geometrisch symmetrisch aufgebaut ist, eine Gesamtdicke von 200 $\mu$m aufweist und als Träger eine PET-Folie mit einer Dicke von 12 $\mu$m besitzt (Haftklebemassenschichtendicke jeweils 94 $\mu$m).

Symmetrische Klebebänder bieten den Vorteil, optimales Schockabsorptions- und Spannungskompensationsvermögen gegenüber Einflüssen auf jeder Seite zu bieten. Insbesondere für Anwendungen, in denen einer oder beide Störeinflüsse ganz oder hauptsächlich von einer Seite zu erwarten sind, kann auch der Einsatz asymmetrischer Klebebänder von Vorteil sein, wobei die zur Störseite ausgerichtete Haftklebemassenschicht bevorzugt die dickere der beiden Haftklebemassenschichten darstellt, um hier eine optimale Kompensation der Störungen zu bewirken. Dabei kann durch die Ausgestaltung der gegenüberliegenden, also auf der störungsanfälligen Seite liegenden, Haftklebemassenschicht als dünne Schicht die Gesamtdicke des Klebebandes reduziert werden. Diese gegenüberliegende Haftklebemassenschicht kann dabei chemisch identisch zu der dickeren Haftklebemassenschicht sein, aber auch chemisch unterschiedlich, insbesondere um an den jeweiligen Untergrund, auf dem verklebt wird, angepasst zu werden.

Zur besseren Handhabbarkeit, beispielsweise zum Aufwickeln als Rolle, kann das erfindungsgemäße doppelseitige Klebeband ein- oder beidseitig mit einer Abdeckung aus einem temporären Abdeckmaterial, vorteilhaft aus Papier oder aus einer entsprechenden Folie, insbesondere einem beidseitig silikonisierten Papier oder einer beidseitig silikonisierten Folie oder einer Silikonfolie, versehen sein, um ein längeres Lagern und eine bequeme Handhabung während des Gebrauchs zu gewährleisten.

Verwendung

Die Erfindung betrifft schließlich Verwendung der doppelseitigen Haftklebebänder zur Verklebung von transparenten Bestandteilen, insbesondere Fenstern (Glasscheiben, Polymerscheiben), auf Kunststoffen, Glas oder Metallen. Besonders betrifft die Erfindung eine derartige Verklebung für elektronische, elektrische und/oder mechanische Geräte, insbesondere elektronische, elektrische und/oder mechanische End- oder Kleingeräte, die aufgrund ihrer Größe und ihres Gewichts ohne größere körperliche Anstrengung tragbar und somit mobil einsetzbar sind und daher insbesondere zum Mit-Sich-Führen vorgesehen sind (sogenannte Mobilgeräte, oder portable Geräte), zum Beispiel Mobiltelefone, Smartphones und Personal Digital Assistants (PDAs, z.B. Organizer, Handhelds, Palmtops); weiterhin Kleincomputer (Mobilcomputer, Taschencomputer) wie beispielweise Laptops, Notebooks, Tablet-PCs; weiterhin Bedieneinheiten für Computer und elektronische Geräte wie Spielkonsolen, Gamepads, Fernbedienungen, Sensorbildschirmen (Touchscreens), Tastfeldern (Touchpads), Grafiktabletts; weiterhin Funkgeräte, GPS-Geräte, Navigationsgeräte, tragbare Schnittstellengeräte der Satellitenkommunikation; weiterhin elektronische Geräte zur Wiedergabe von elektronischen (Unterhaltungs-)Medien, wie beispielweise Walk- und Discmans, MP3-Player, Taschenfernseher und -rundfunkgeräte, E-Book-Lesegeräte; weiterhin Digitalkameras, Filmkameras, Videokameras; weiterhin Armbanduhren, Digitaluhren, Taschenrechner; weiterhin medizinische Mobilgeräte und/oder solche für Sportler, wie Blutzuckermessgeräte, Blutdruckmessgeräte, Pulsmesser, medizinische Überwachungs- und/oder Steuergeräte und/oder Monitoren, Schrittzähler, Tachometer. Die vorstehenden Angaben erfolgen ohne Anspruch auf Vollständigkeit.

Messmethoden / Angaben bezüglich genannter Parameterwerte

I: Messungen mit dem unvernetzten Polyacrylat (Polymerisationsprodukt)

Mittleres Molekulargewicht

Die Angaben der zahlenmittleren Molmasse $M_{N,P}$ und der Polydisperistät PD in dieser Schrift beziehen sich auf die Bestimmung per Gelpermeationschromatographie (GPC). Die Bestimmung erfolgt an 100 $\mu$l klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C.

Als Vorsäule wird eine Säule Typ PSS-SDV, 5 $\mu$m, $10^3$ Å, 8,0 mm $\times$ 50 mm (Angaben hier und im Folgenden in der Reihenfolge: Typ, Partikelgröße, Porosität, Innendurchmesser $\times$ Länge; 1 Å = $10^{-10}$ m) verwendet. Zur Auftrennung wird eine Kombination der Säulen des Typs PSS-SDV, 5 $\mu$m, $10^3$ Å sowie $10^5$ Å und $10^6$ Å mit jeweils 8,0 mm $\times$ 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt gegen PMMA-Standards (Polymethylmethacrylat-Kalibrierung)].

II. Messungen mit dem Harz

Erweichungspunkt $T_E$

Die Bestimmung des Erweichungspunktes $T_E$ von Harzen erfolgt mittels des Ring-Kugel-Verfahrens durch entsprechende Anwendung der Bestimmungen der DIN EN 1427:2007 (Untersuchung der Harzprobe statt Bitumens bei ansonsten beibehaltener Verfahrensführung). Die Messungen erfolgen im Glycerolbad. Die Angaben zum Erweichungspunkt beziehen sich auf die Ergebnisse dieser Messung.

III. Messungen mit dem doppelseitigen Klebeband

Für die folgenden Untersuchungen wurde ein symmetrisches, doppelseitiges Klebeband (Gesamtdicke 200 $\mu$m, Trägerfolie PET 12 $\mu$m) verwendet (Herstellung siehe unten).

Glasübergangstemperaturen $T_G$; Glasübergangsfrequenzen $f_G$; Verlustfaktor tan $\delta$

Glasübergangstemperaturen $T_G$, Glasübergangsfrequenzen $f_G$ sowie der Verlustfaktor tan $\delta$ wurden durch dynamisch mechanische Analyse (DMA) bestimmt; dabei wurden folgende Verfahrensführungen gewählt: Glasübergangstemperaturen wurden mittels Temperatursweep, Glasübergangsfrequenzen mittels Time-Temperatur-Superposition-Verfahren (TTS) und Verlustfaktor-Werte (sowie Verlustmodul-Werte, Speichermodul-Werte) mittels Frequenzsweep ermittelt. Alle Angaben im Rahmen dieser Schrift beziehen sich auf die Ergebnisse dieser Messungen, sofern im Einzelnen nichts anderes angegeben ist.

Bei der DMA wird davon Gebrauch gemacht, dass die Eigenschaften von viskoelastischen Materialien sich bei einer sinusförmigen mechanischen Beanspruchung von der Frequenz der Beanspruchung (also der Zeit) als auch von der Temperatur abhängen. Bei dem TTS-Verfahren werden in regelmäßigen Temperaturabständen durchgeführte Frequenzmessungen zu einem Frequenzsweep verrechnet; dadurch kann der durch die Messungen zugängliche Bereich um mehrere Dekaden nach unten und nach oben erweitert werden.

Alle DMA-Verfahrensführungen:
Messgerät: Rheometric Scientific RDA III; Messkopf: federgelagert mit Normalkraft; Temperierung: Heizkammer; Messgeometrie: parallele-Platten-Anordnung, Probendicke 1 ($\pm$ 0,1) mm; Probendurchmesser 25 mm (zur Herstellung einer 1 mm dicken Probe wurden 5 Schichten (jeweils 200 $\mu$m) des zu untersuchenden Klebebandes aufeinanderlaminiert; da der PET-Träger zu den rheologischen Eigenschaften nicht maßgeblich beiträgt, kann seine Anwesenheit vernachlässigt werden).

Temperatursweep:
Messfrequenz 10 rad/s; Temperaturbereich - 40 °C bis + 130 °C; Aufheizrate 2,5 °C/min; Deformation 1 %

Frequenzsweep:
Messfrequenz: 0,1 bis 100 (512) rad/s; Temperatur 25 °C; Stress 2500 Pa; Deformation 1 %

TTS-Messung:
Messfrequenz 0,1 bis 512 rad/s; Temperatur - 35 bis +190°C in 15 °C-Schritten; Deformation 1 %

Rolling-Ball-Tack

Die Messung des Rolling-Ball-Tacks erfolgte nach der Methode PSTC-6 (Test Methods for Pressure Sensitive Adhesive Tapes, 15th Edition; Herausgeber: Pressure Sensitive Tape Council, Northbrook (Illinois), USA), wobei die folgenden Abwandlungen vorgenommen wurden:

- Verwendung von Edelstahl-Kugellagerkugeln (Edelstahl 1.4401), Durchmesser 7/16 Zoll (11,11 cm), Masse 5,7 g
- Vorbereitung der Kugeln: Gründliche Reinigung mit Zellstoff und Aceton; die sauberen Kugeln werden vor der Messreihe für 15 min in einem Acetonbad gelagert (Kugeln sind vom Aceton vollständig umgeben); mindestens 30 min vor Beginn der Messung werden die Kugeln dem Acetonbad entnommen und zum Trocknen und Konditionieren offen im Normalklima (23 ± 1 °C, 50 ± 5 % rel. Feuchte) gelagert
- Jede Kugel wird nur für eine Messung verwendet.

Die Bestimmung der Anfassklebrigkeit wurde wie folgt durchgeführt: Als Maß für die Anfassklebrigkeit bei sehr kurzer Kontaktzeit wurde der so genannte "Rolling-Ball-Tack" gemessen. Ein etwa 30 cm langer Streifen des Klebebandes wurde mit der klebenden Seite nach oben unter Spannung horizontal auf der Prüfebene befestigt. Zur Messung wurde die Stahlkugel durch Herabrollen von einer 65 mm hohen Rampe (Neigungswinkel: 21 °) im Schwerefeld der Erde beschleunigt. Von der Rampe wurde die Stahlkugel unmittelbar auf die klebende Oberfläche der Probe gelenkt. Der auf der Klebemasse bis zum Stillstand der Kugel zurückgelegte Weg wurde gemessen. Die Temperatur am Messplatz und die der Kugeln lag bei der Messung bei 23 ± 1 °C.

Die so ermittelte Rollweglänge dient hierbei als inverses Maß für die Anfassklebrigkeit der Selbstklebemasse (das heißt, je kürzer der Rollweg ist, desto höher ist die Anfassklebrigkeit und umgekehrt). Der jeweilige Messwert ergab sich (als Längenangabe in mm) aus dem Mittelwert von fünf Einzelmessungen an jeweils fünf unterschiedlichen Streifen des Klebebandes.

Cleavage Test

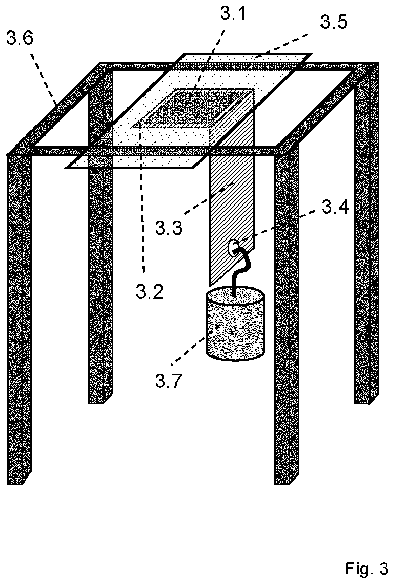

(Fig. 3 zeigt die Testdurchführungsphase; die Positionsziffern der betreffenden Teile wurde im Folgenden auch schon bei der Beschreibung der Vorbereitungsphase verwendet)

*Untersuchungsmaterialien:*

- Stahlwinkel aus SUS304-Stahl, acetongereinigt, Stahlflächen 30 mm × 30 mm (3.2) und 30 mm × 60 mm (3.3) mit 90 °-Winkel zwischen den Flächen; Aufhängeöse (3.4) in der größeren Fläche (3.3)
- Polycarbonatplatten (PC-Platten) und Polymethylmethacrylatplatten (PMMA-Platten) (3.5), jeweils 75 mm × 50 mm
- Gewicht (3.7), 250 g, mit Haken zum Aufhängen
- Stahlrahmengestell (3.6)

*Testvorbereitung:*

- Die PC-Platten wurden 24 Stunden bei 85 °C gelagert und vor der Verklebung 30 min bei Raumtemperatur konditioniert.
- Die PMMA-Platten wurden 24 Stunden bei 70 °C gelagert und vor der Verklebung 30 min bei Raumtemperatur konditioniert.

Das zu untersuchende doppelseitige Klebeband wurde mit einer Seite auf ein Trennpapier geklebt und in 25 mm × 25 mm große Proben (3.1) geschnitten. Die quadratischen Klebebandproben (3.1) wurden mit der freien Klebemassenseite jeweils mittig auf die Außenseite der kleineren Fläche (3.2) eines Stahlwinkels geklebt, dann wurde das Trennpapier abgezogen und die nun freiliegende Klebefläche mittig auf eine PC- bzw. eine PMMA-Platte (3.5) geklebt, so dass die größere Fläche (3.3) des Stahlwinkels senkrecht nach oben zeigte. Die kleinere, waagrecht liegende Stahlwinkelfläche (3.2) wurde für 10 min mit einem 6 kg-Gewicht belastet, um einen hinreichenden Anpressdruck für beide Verklebungen jeder Probe zu erzeugen. Dann wurde das Gewicht entfernt und die Probe für 24 Stunden bei Raumtemperatur in diesem Zustand stehen gelassen (Aufziehen der Klebemassen auf dem jeweiligen Untergrund). Die Proben wurden daraufhin für 10 min bei 85 °C in einem Trockenschrank klimatisiert.

*Testdurchführung (siehe Figur 3)*

Die PC- bzw. PMMA-Platte (3.5) mit dem mittels der Klebebandprobe (3.1) verklebten Stahlwinkel (3.2, 3.3) wird derart auf das Stahlrahmengestell (3.6) gelegt, dass der Stahlwinkel (3.2, 3.3) nach unten hängt (größere Fläche (3.3) zeigt senkrecht nach unten). Sodann wird das Gewicht (3.7) (250 g) in die Öse gehängt, die Verklebung somit belastet und dieser Zeitpunkt als Startzeit notiert.

Es wurden bezüglich jedes zu untersuchenden Klebebandes 10 identische Proben hergestellt und jeweils 5 Messungen mit der PC-Platte und 5 Messungen mit der PMMA-Platte durchgeführt.

Der Test gilt als bestanden, wenn nach jeweils 72 Stunden bei keiner der 10 Messungen der Stahlwinkel abgefallen war.

Kugelfalltest

Dieser Test lässt Aussagen über die Stoßbeständigkeit ("Shock Resistance") der mit dem erfindungsgemäßen Klebeband bzw. mit Vergleichsproben verklebten Probemustern zu, die auf die Schockabsorptionsfähigkeit des Klebebandes zurückzuführen sind.

Aus dem zu untersuchenden Klebeband wurde eine quadratische, rahmenförmige Probe ausgeschnitten (Außenmaße 33 mm × 33 mm; Stegbreite 3,0 mm; Innenmaße ("Fenster" 27 mm × 27 mm). Diese Probe wurde auf einen ABS-Rahmen (Außenmaße 50 mm × 50 mm; Innenmaße ("Fenster") 25 mm × 25 mm; Dicke 3 mm) geklebt. Auf der anderen Seite des doppelseitigen Klebeband wurde ein PMMA-Fenster von 30 mm × 30 mm geklebt. Die Verklebung von ABS-Rahmen, Klebebandrahmen und PMMA-Fenster erfolgte derart, dass die geometrischen Zentren und die Diagonalen jeweils übereinanderlagen (Eck-auf-Eck). Die Verklebungsfläche betrug 360 mm$^2$. Die Verklebung wurde für 5 s mit 10 bar gepresst und für 24 Stunden ruhen gelassen.

Der Kleberverbund aus ABS-Rahmen, Klebeband und PMMA-Fenster wurde mit den überstehenden Kanten des ABS-Rahmens derart auf ein Rahmengestell gelegt, dass der Verbund waagrecht ausgerichtet war und das PMMA-Fenster frei hängend nach unten zeigte. Auf die so angeordnete Probe wurde senkrecht aus einer Höhe von 250 cm eine Stahlkugel (Durchmesser 15 mm, Masse 5,6 g) fallen gelassen (Messbedingungen 23 °C, 50 % relative Feuchte). Mit jeder Probe wurden drei Untersuchungen durchgeführt.

Der Kugelfalltest gilt als bestanden, wenn sich die Verklebung bei keiner der drei Untersuchungen gelöst hat.

SAFT-Shear Adhesive Failure Temperature

Dieser Test dient der Schnellprüfung der Scherfestigkeit von Klebebändern unter Temperaturbelastung. Dafür wird das zu untersuchende Klebeband auf eine temperierbare Stahlplatte geklebt, mit einem Gewicht (50 g) belastet und die Scherstrecke aufgezeichnet.

*Messprobenpräparation:*

Das zu untersuchende Klebeband wird auf eine 50 μm dicke Aluminiumfolie geklebt. Das so präparierte Klebeband wird auf eine Größe von 10 mm × 50 mm geschnitten.

Die zugeschnittene Klebebandprobe wird auf eine polierte, mit Aceton gereinigte Stahl-Prüfplatte (Werkstoff 1.4301, DIN EN 10088-2, Oberfläche 2R, Oberflächen-Rauigkeit Ra = 30 bis 60 nm, Abmessungen 50 mm × 13 mm × 1,5 mm) derart verklebt, dass die Verklebungsfläche der Probe Höhe × Breite = 13 mm × 10 mm beträgt und die Stahl-Prüfplatte am oberen Rand um 2 mm überragt. Anschließend mit einer 2 kg-Stahlrolle und einer Geschwindigkeit von 10 m/min zur Fixierung sechsmal überrollt. Die Probe wird oben bündig mit einem stabilen Klebestreifen verstärkt, der als Auflage für den Wegmessfühler dient. Dann wird die Probe mittels der Stahlplatte derart aufgehängt, dass das länger überstehende Ende des Klebebandes senkrecht nach unten zeigt.

*Messung:*

Die zu messende Probe wird am unteren Ende mit einem Gewicht von 50 g belastet. Die Stahl-Prüfplatte mit der verklebten Probe wird beginnend bei 25 °C mit einer Rate von 9 °C pro Minute auf die Endtemperatur von 200 °C aufgeheizt.

Beobachtet wird der Rutschweg der Probe mittels Wegmessfühler in Abhängigkeit von Temperatur und Zeit. Der maximale Rutschweg ist auf 1000 μm (1 mm) festgelegt, bei überschreiten wird der Test abgebrochen. Prüfklima: Raumtemperatur 23 ± 3 °C, relative Luftfeuchtigkeit 50 ± 5 %.

Der Text gilt als bestanden (die Probe als hinreichend temperaturbeständig), wenn die Rutschstrecke bei 200 °C den Wert von 1000 μm nicht überschritten hat. Bei Nichtbestehen des Tests wird die Temperatur bei Erreichen des

maximalen Rutschweges (1000 $\mu$m) angegeben (in °C).

**Experimenteller Teil**

Herstellung der Haftklebemasse

Ein für radikalische Polymerisationen unter Siedekühlung geeigneter konventioneller 2 L-Glasreaktor wurde mit 300 g einer Monomermischung, enthaltend 142,5 g Butylacrylat, 142,5 g Ethylhexylacrylat und 15 g Acrylsäure, und 200 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,15 g 2,2'-Azodi(2-methylbutyronitril (Vazo 67®, Fa. DuPont), gelöst in 6 g Aceton, hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,15 g VAZO 67®, gelöst in 6 g Aceton, hinzugegeben. Nach 3 Stunden wurde mit 90 g Aceton/Siedegrenzenbenzin 60/95 (1:1) verdünnt.

Nach 5:30 Stunden Reaktionszeit wurden 0,45 g Bis-(4-tert.-Butylcyclohexanyl)-Peroxy-dicarbonat (Perkadox 16®, Fa Akzo Nobel), gelöst in 9 g Aceton, hinzugegeben. Nach 7 Stunden Reaktionszeit wurden weitere 0,45 g Bis-(4-tert.-Butylcyclohexanyl)-Peroxy-dicarbonat (Perkadox 16®, Fa Akzo Nobel), gelöst in 9 g Aceton, hinzugegeben. Nach 10 Stunden Reaktionszeit wurde mit 90 g Aceton/Siedegrenzenbenzin 60/95 (1:1) verdünnt. Die Reaktion wurde nach 24 h Reaktionszeit abgebrochen und auf Raumtemperatur abgekühlt. Das zahlenmittlere Molekulargewicht der resultierenden Polymere lag für alle derart hergestellten Polymere im Bereich von $M_n$ = 100.000 g/mol (siehe Tabelle).

Anschließend wurde das Polymerisat mit der entsprechenden Menge Vernetzer [Beispiele 1 bis 15: Tetraglycidyl-mety-Xylenediamin; Erisys ® GA-240; 3 %ige Lösung in Aceton; Beispiel 16: Aluminium-(III)-acetylacetonat, 3%ige Lösung in Aceton] sowie für die harzabgemischten Massen mit der entsprechenden Menge Klebharz (Sylvares TP 95®; Terpenphenolharz, Erweichungstemperatur 92 bis 98 °C (typischer Wert 95 °C; Herstellerangabe, Arizona Chemical) abgemischt und auf einen Feststoffgehalt von 40 % mit Aceton/Siedegrenzenbenzin 60/95 (1:1) verdünnt.

Mengenanteile für Vernetzer und Harze siehe jeweils Angaben in der Tabelle 1; die Angabe der Vernetzer-Gewichtsteils bezieht sich auf die Menge an reinem Vernetzer (ohne Verdünnungsmittel) und ist normiert auf jeweils 100 Gewichtsteile der Polyacrylatkomponente A1.

Herstellung des doppelseitigen Haftklebebandverbundes:

Die 40 %ige Polymermassenlösung wurde auf ein Linermaterial (silikonisiertes Trennpapier) beschichtet und für 15 Minuten bei 120 °C getrocknet, wobei die Vernetzungsreaktion stattfand. Nach der Trocknung wurde eine vernetzte Haftklebemassenschicht von 94 $\mu$m Dicke erhalten.

Die derart hergestellten Haftklebemassenschichten wurden mit üblichen Verfahren beidseitig auf eine 12 $\mu$m dicke PET-Trägerfolie laminiert, so dass ein doppelseitiges symmetrisches Haftklebeband von 200 $\mu$m Gesamtdicke erhalten wurde.

Die Ergebnisse der Experimente zeigt Tabelle 1.

Die Eignung der Haftklebemasse für das geforderte Einsatzgebiet zeigt sich in einem bestandenen Cleavagetest und einem bestandenen Kugelfalltest. Hierzu ist es notwendig, die rheologischen Eigenschaften der Haftklebemasse sehr genau zu justieren. Erfindungsgemäß erfolgt dies durch Menge und Art der eingesetzten Polymere, die Menge des eingesetzten Vernetzers und die Begrenzung der Beimischung von Klebharzen. Durch die Wahl ausgewählter Vernetzer, wie im Rahmen dieser Schrift dargestellt, lässt sich die Feinjustierung weiter optimieren.

Optional kann der Haftklebemasse ein Harz beigemischt sein. Es hat sich allerdings gezeigt, dass zu hohe Harzbeimischungen (hier mehr als 13 Gew.-%) dazu führen, dass der Kugelfalltest nicht bestanden wird und die Haftklebemasse daher nicht für den geforderten Einsatzzweck geeignet ist (vgl. Beispiele 3, 5, 7, 8, 12).

Das Bestehen des Cleavage Tests zeigt die Resistenz der untersuchten Klebebänder und der damit erzeugten Verklebungen insbesondere gegenüber niederfrequenten Störungen. Insbesondere dient der Cleavage Test dazu, die Eignung zur Kompensation von Biegespannungen sowie eine gute Temperatur-Kohäsionsbeständigkeit zu illustrieren.

Es konnte festgestellt werden, dass der Cleavage Test dann bestanden wird, wenn das Mengenverhältnis V = $n_Z/n_P$ der Stoffmenge $n_Z$ der vernetzungsaktiven Zentren des Vernetzers zu der theoretischen Stoffmenge $n_P$ der Makromoleküle der Polymerkomponente A1 in einem bestimmten Bereich gewählt wird, wie er im Hauptanspruch angegeben wird (siehe Beispiele 1, 2, 3, 7, 10, 11, 12). Der durch diese Vernetzermenge erzielte Vernetzungsgrad lässt sich durch den Verlustfaktor tan $\delta$ hervorragend charakterisieren. Für die erfolgreichen Beispiele liegt der Verlustfaktor in dem im Rahmen dieser Schrift vorgegebenen Bereich.

Der Kugelfalltest ist insbesondere geeignet, um das Schockabsorptionsvermögen des Klebebandes, also die Eignung, mechanische Einflüsse wie Stürze oder Stöße abzupuffern, zu untersuchen. Bei Bestehen dieses Tests wird die diesbezügliche Eignung als hinreichend angesehen.

Die Experimente ergeben, dass der Kugelfalltest regelmäßig dann bestanden wurde, wenn der Rolling-Ball-Tack-Test einen Wert von nicht mehr als 50 mm ergab. Als weiteres Charakteristikum kann die Glasübergangsfrequenz $f_G$ bei 25 °C herangezogen werden. Der Kugelfalltest wurde von den Proben bestanden, bei denen die Glasübergangsfrequenz $f_G$ bei 25 °C einen Wert von mindestens 5000 rad/s erreicht (Beispiele 1, 2, 4, 6, 9, 10, 11, 13, 14).

Die Klebebänder mit den erfindungsgemäßen Merkmalen bestehen den Temperaturbeständigkeitstest (SAFT-Test) ebenso wie die Klebebänder mit hochvernetzten Haftklebemassen. Eine Untervernetzung der Polyacrylatkomponente (zu geringe Vernetzermenge) führt jedoch zu einer nicht hinreichenden Temperaturbeständigkeit.

Es konnte zudem festgestellt werden, dass die mit einem Aluminiumchelatvernetzer vernetzte Probe (Beispiel 16) zwar den Kugelfalltest besteht, nicht aber den Cleavage Test und auch keine gute Temperaturbeständigkeit zeigt (Versagen des SAFT-Tests). So erfüllt eine derart vernetzte Haftklebemasse zwar die Forderungen gemäß der Aufgabenstellung nicht. Die mit den erfindungsgemäß geforderten Vernetzern hergestellten Haftklebemassen weisen daher gegenüber den chelatvernetzten Haftklebemassen einen deutlichen Vorteil auf.

Somit konnte gezeigt werden, dass die beanspruchten Klebebänder hervorragend geeignet sind, die objektive Aufgabe zu erfüllen. Die ebenfalls beanspruchte Polymermasse ist hervorragend geeignet, derartige Klebebänder herzustellen.

| Tabelle 1 | Kompo-nente | | Einheit | 1 | 2 | 3 (V) | 4 (V) | 5 (V) | 6 (V) | 7 (V) | 8 (V) |
|---|---|---|---|---|---|---|---|---|---|---|---|
| Acrylsäure | a1 | | Gew.% (*) | 5 | 4,55 | 4,17 | 4,76 | 4,17 | 5 | 4,35 | 4,35 |
| Butylacrylat | b | A1 | Gew.% (*) | 47,5 | 43,18 | 39,58 | 45,24 | 39,58 | 47,5 | 41,3 | 41,3 |
| Ethylhexylacrylat | b | | Gew.% (*) | 47,5 | 43,18 | 39,58 | 45,24 | 39,58 | 47,5 | 41,3 | 41,3 |
| Harz (Terpenphenol-) | A2 | | Gew.% (*) | 0 | 9,09 | 16,67 | 4,76 | 16,67 | 0 | 13,05 | 13,05 |
| Vernetzer | B | | Gew.-Teile | 0,05 (**) | 0,05 (**) | 0,05 (**) | 0,075 (**) | 0,1 (**) | 0,1 (**) | 0,05 (**) | 0,075 (**) |
| Vernetzer-Mengenverhältnis V | | | | 0,39 | 0,58 | 0,46 | 0,8 | 0,87 | 1,07 | 0,51 | 0,69 |
| zahlenmittleres Molekulargewicht $M_n$ | | | kg/mol | 80 | 120 | 95 | 110 | 90 | 110 | 105 | 95 |
| Kugelfalltest (***) | | | | ja | ja | nein | ja | nein | ja | nein | nein |
| RBT | | | mm | 34 | 49 | 87 | 37 | 79 | 34 | 60 | 63 |
| $f_G$ bei 25 °C (DMA) | | | rad/s | 7630 | 6020 | 2071 | 8709 | 2336 | 13280 | 3852 | 3713 |
| $T_G$ bei 10 rad/s (DMA) | | | °C | -26 | -18 | -8 | -22 | -7 | -26 | -10 | -10 |
| SAFT (***) | | | | ja | ja | ja | ja | ja | ja | ja | ja |
| Cleavage (***) | | | | ja | ja | ja | nein | nein | nein | ja | nein |
| tan δ (0,1 rad, 85 °C) | | | | 0,41 | 0,43 | 0,45 | 0,28 | 0,23 | 0,22 | 0,44 | 0,29 |

(*) bezogen auf Polymermasse (Komponenten a1, b und A2)
(**) Tetraglycidyl-meta-Xylenediamin; bezogen ohne Verdünnung auf 100 Gew.-Teile der Polyacrylatkomponente A1 (Komponenten a1, b)
(***) ja = bestanden; nein = nicht bestanden
(V) Vergleichsbeispiel

| Tabelle 1 (Fortsetzung) | Kompo-nente | | Einheit | 9 (V) | 10 | 11 | 12 (V) | 13 (V) | 14 (V) | 15 (V) | 16 (V) |
|---|---|---|---|---|---|---|---|---|---|---|---|
| Acrylsäure | a1 | | Gew.% (*) | 5 | 5 | 4,55 | 4,17 | 5 | 4,55 | 4,17 | 4,55 |
| Butylacrylat | b | A1 | Gew.% (*) | 47,5 | 47,5 | 43,18 | 39,58 | 47,5 | 43,18 | 39,58 | 43,18 |
| Ethylhexylacrylat | b | | Gew.% (*) | 47,5 | 47,5 | 43,18 | 39,58 | 47,5 | 43,18 | 39,58 | 43,18 |
| Harz (Terpenphenol-) | A2 | | Gew.% (*) | 0 | 0 | 9,09 | 16,67 | 0 | 9,09 | 16,67 | 9,09 |
| Vernetzer | B | | Gew.-Teile | 0,075 (**) | 0,25 (**) | 0,25 (**) | 0,25 (**) | 0,01 (**) | 0,01 (**) | 0,01 (**) | 0,05 (****) |
| Vernetzer-Mengenverhältnis V | | | | 0,66 | 0,23 | 0,24 | 0,22 | 0,09 | 0,1 | 0,1 | 0,46 |
| zahlenmittleres Molekulargewicht $M_n$ | | | kg/mol | 90 | 95 | 100 | 90 | 95 | 100 | 105 | 100 |
| Kugelfalltest (***) | | | | ja | ja | ja | nein | ja | ja | nein | ja |
| RBT | | | mm | 32 | 31 | 47 | 69 | 34 | 45 | 64 | 45 |
| $f_G$ bei 25 °C (DMA) | | | rad/s | 13770 | 14105 | 5780 | 3101 | 8114 | 5912 | 3759 | 5645 |
| $T_G$ bei 10 rad/s (DMA) | | | °C | -26 | -26 | -17 | -8 | -27 | -19 | -9 | -17 |
| SAFT (***) | | | | ja | ja | ja | ja | nein (150°C) | nein (140°C) | nein (130°C) | nein (100 °C) |
| Cleavage (***) | | | | nein | ja | ja | ja | nein | nein | nein | nein |
| tan δ (0,1 rad, 85 °C) | | | | 0,27 | 0,59 | 0,59 | 0,59 | 0,81 | 0,93 | 1,07 | 1,18 |

(*)  bezogen auf Polymermasse (Komponenten a1, b und A2)
(**)  Tetraglycidyl-meta-Xylenediamin; bezogen ohne Verdünnung auf 100 Gew.-Teile der Polyacrylatkomponente A1 (Komponenten a1, b)
(***)  ja = bestanden; nein = nicht bestanden

**Patentansprüche**

1.  Verwendung eines doppelseitigen Klebebandes einer Dicke von 100 bis 300 μm, umfassend eine Trägerschicht sowie zwei außenliegende Haftklebemassenschichten, zur Verklebung von transparenten Bestandteilen, insbesondere Fenstern, Glasscheiben oder Polymerscheiben, auf Kunststoffen, Glas oder Metallen,

wobei zumindest eine der Haftklebemassen des Klebebandes das Vernetzungsprodukt ist aus einer Polymermasse, die zumindest die folgenden Komponenten umfasst:

A) eine Polymerkomponente (Komponente A), umfassend 88 bis 100 Gew.-% eines oder mehrerer Polyacrylate (Komponente

A1) aus zumindest:

a) 1 bis 15 Gew.-%, bezogen auf die Komponente A1, eines oder mehrerer Monomere mit zumindest einer ethylenisch ungesättigten Bindung, die jeweils derart gewählt sind, dass die Glasübergangstemperaturen $T_G$ der entsprechenden Homopolymere aus dem jeweiligen Monomeren mindestens 0 °C betragen (Monomere a), wobei zumindest ein Teil der Monomere (a) weiterhin zumindest eine Carbonsäuregruppe aufweist (Monomere a1),
b) 85 bis 99 Gew.-%, bezogen auf die Komponente A1, eines oder mehrerer Monomere aus der Gruppe der Acrylsäureester und Methacrylsäureester, die jeweils derart gewählt sind, dass die Glasübergangstemperaturen $T_G$ der entsprechenden Homopolymere aus dem jeweiligen Monomeren nicht mehr als -30 °C betragen (Monomere b)

B) zumindest einem kovalent vernetzenden bi- oder polyfunktionellem Vernetzer (Komponente B),

wobei die Komponenten A und B in Summe mindestens 95 Gew.-% der Polymermasse ausmachen,
**dadurch gekennzeichnet, dass**
der zumindest eine Vernetzer in einer Menge zugegen ist,
dass das Mengenverhältnis $V = n_Z/n_P$ der Stoffmenge $n_Z$ der vernetzungsaktiven Zentren des Vernetzers zu der theoretischen Stoffmenge $n_P$ der Makromoleküle der Polymerkomponente A1 einen Wert zwischen 0,15 und 0,60 besitzt,

wobei sich die Stoffmenge nz der vernetzungsaktiven Zentren des Vernetzers ergibt aus der mit der Anzahl f der vernetzungsaktiven Zentren pro Vernetzermolekül multiplizierten Masse $m_V$ des Vernetzers geteilt durch die Molmasse Mv des Vernetzers, also $n_Z = f \cdot m_V/M_V$,

und die theoretische Stoffmenge np der Makromoleküle der Polymerkomponente A1 sich ergibt aus der Masse mp der Polymerkomponente in der Haftklebemasse geteilt durch die zahlenmittlere Molmasse $M_{n,P}$ dieser Komponente, also np = $m_P/M_{n,P}$.

**2.** Verwendung nach Anspruch 1 für die Verklebung von Komponenten von Konsumgüterelektronikartikeln, insbesondere von Display-Fenstern.

**3.** Verwendung nach einem der vorangehenden Ansprüche, **dadurch gekennzeichnet, dass** die Monomere a1 zu 3 bis 5 Gew.-%, bezogen auf die Komponente A1, vorliegen.

**4.** Verwendung nach einem der vorangehenden Ansprüche, **dadurch gekennzeichnet, dass** zumindest ein Teil der Monomere gewählt ist aus der Gruppe umfassend Acrylsäuremethylester, Acrylsäureethylester, Methacrylsäuremethylester und Methacrylsäureethylester (Monomere a2).

**5.** Verwendung nach Anspruch 4, **dadurch gekennzeichnet, dass** die Monomere a2 bis zu 10 Gew.-%, bezogen auf die Komponente A1, vorliegen.

**6.** Verwendung nach einem der vorangehenden Ansprüche, **dadurch gekennzeichnet, dass** die Polymerkomponente A weiterhin bis zu 12, bevorzugt bis zu 10 Gew.-% einer Harzkomponente (Komponente A2) mit einem Erweichungspunkt von 80 bis 150 °C umfasst.

**7.** Verwendung nach einem der vorangehenden Ansprüche, **dadurch gekennzeichnet, dass** **dadurch gekennzeichnet, dass** der Vernetzer ein kovalent reagierender Vernetzer ist.

**8.** Verwendung nach Anspruch 6, **dadurch gekennzeichnet, dass** als Vernetzer eine chemische Verbindung enthaltend sowohl Epoxy- als auch Aminfunktionen im Molekül eingesetzt wird.

**9.** Verwendung nach einem der vorangehenden Ansprüche, **dadurch gekennzeichnet, dass** als Vernetzer Tetraglycidyl-meta-Xylenediamin eingesetzt wird.

**10.** Verwendung nach einem der vorangehenden Ansprüche, **dadurch gekennzeichnet, dass** das Mengenverhältnis V = $n_Z/n_P$ der Stoffmenge $n_Z$ der vernetzungsaktiven Zentren des Vernetzers zu der theoretischen Stoffmenge np der Makromoleküle der Polymerkomponente A1 einen Wert zwischen 0,38 und 0,59 besitzt.

**11.** Verwendung nach einem der vorangehenden Ansprüche, **dadurch gekennzeichnet, dass** die Haftklebemassenschichten auf beiden Seiten der Trägerschicht geometrisch identisch sind.

**12.** Verwendung nach einem der vorangehenden Ansprüche, **dadurch gekennzeichnet, dass** die Haftklebemassen auf beiden Seiten der Trägerschicht chemisch identisch sind.

**Claims**

**1.** Use of a double-sided adhesive tape with a thickness of 100 to 300 $\mu$m, comprising a carrier layer and also two outer layers of pressure-sensitive adhesive (PSA), for bonding transparent constituents, more particularly windows, glass sheets, or polymer sheets, to plastics, glass, or metals

wherein at least one of the PSAs of the adhesive tape is the crosslinking product of a polymer composition which comprises at least the following components:

A) a polymer component (component A)
comprising 88 to 100 wt.% of one or more polyacrylates (component A1) composed of at least:

a) 1 to 15 wt.%, based on component A1, of one or more monomers having at least one ethylenically unsaturated bond, which are each selected such that the glass transition temperatures $T_g$ of the corresponding homopolymers of the respective monomer are at least 0°C (monomers a),
and at least some of the monomers (a) also have at least one carboxylic acid group (monomers a1),
b) 85 to 99 wt.%, based on component A1, of one or more monomers from the group of acrylic esters and methacrylic esters, which are each selected such that the glass transition temperatures $T_g$ of the corresponding homopolymers of the respective monomer are not more than -30°C (monomers b),

B) at least one covalently crosslinking di- or polyfunctional crosslinker (component B),

where components A and B account in total for at least 95 wt.% of the polymer composition,
**characterized in that**
the at least one crosslinker is present in an amount such that
the ratio $V = n_Z/n_P$ of the amount-of-substance $n_Z$ of the crosslinking-active centres of the crosslinker to the theoretical amount-of-substance $n_P$ of the macromolecules of the polymer component A1 possesses a value of between 0.15 and 0.60,
where the amount-of-substance $n_Z$ of the crosslinking-active centres of the crosslinker is given by the mass $m_V$ of the crosslinker, multiplied by the number f of the crosslinking-active centres per crosslinker molecule, divided by the molar mass $M_V$ of the crosslinker, in other words $n_Z = f \cdot m_V/M_V$, and the theoretical amount-of-substance $n_P$ of the macromolecules of the polymer component A1 is given by the mass $m_P$ of the polymer component in the PSA, divided by the number-average molar mass $M_{n,P}$ of this component, in other words $n_P = m_P/M_{n,P}$.

2. Use according to Claim 1 for bonding components of consumer electronics articles, more particularly of display windows.

3. Use according to either of the preceding claims, **characterized in that**
the monomers a1 are present at 3 to 5 wt.%, based on component A1.

4. Use according to any of the preceding claims, **characterized in that**
at least some of the monomers are selected from the group encompassing methyl acrylate, ethyl acrylate, methyl methacrylate, and ethyl methacrylate (monomers a2).

5. Use according to Claim 4, **characterized in that** the monomers a2 are present at up to 10 wt.%, based on component A1.

6. Use according to any of the preceding claims, **characterized in that**
the polymer component A further comprises up to 12, preferably up to 10 wt.% of a resin component (component A2) having a softening point of 80 to 150°C.

7. Use according to any of the preceding claims, **characterized in that**
**characterized in that** the crosslinker is a covalently reacting crosslinker.

8. Use according to Claim 6, **characterized in that** use is made as crosslinker of a chemical compound comprising not only epoxy functions but also amine functions in the molecule.

9. Use according to any of the preceding claims, **characterized in that**
use is made as crosslinker of tetraglycidyl-meta-xylenediamine.

10. Use according to any of the preceding claims, **characterized in that**
the ratio $V = n_Z/n_P$ of the amount-of-substance $n_Z$ of the crosslinking-active centres of the crosslinker to the theoretical amount-of-substance $n_P$ of the macromolecules of the polymer component A1 possesses a value of between 0.38 and 0.59.

11. Use according to any of the preceding claims, **characterized in that**
the layers of pressure-sensitive adhesive on both sides of the carrier layer are geometrically identical.

12. Use according to any of the preceding claims, **characterized in that**
the pressure-sensitive adhesives on both sides of the carrier layer are chemically identical.

**EP 2 638 120 B1**

**Revendications**

1. Utilisation d'un ruban adhésif double face d'une épaisseur de 100 à 300 $\mu$m, comprenant une couche de support ainsi que deux couches de masses autoadhésives situées à l'extérieur, pour le collage de composants transparents, en particulier de fenêtres, de vitres de verre ou de vitres de polymère, sur des matières plastiques, du verre ou des métaux,

   au moins l'une des masses autoadhésives du ruban adhésif étant le produit de réticulation d'une masse de polymère qui comprend au moins les composants suivants :

   A) un composant de type polymère (composant A), comprenant 88 à 100 % en poids d'un ou plusieurs polyacrylates (composant A1) composés d'au moins :

   a) 1 à 15 % en poids, par rapport au composant A1, d'un ou plusieurs monomères comportant au moins une liaison éthyléniquement insaturée, qui sont choisis à chaque fois de telle manière que les températures de transition vitreuse $T_G$ des homopolymères correspondants du monomère respectif soient d'au moins 0 °C (monomères a), au moins une partie des monomères (a) présentant en outre au moins un groupe acide carboxylique (monomères a1),
   b) 85 à 99 % en poids, par rapport au composant A1, d'un ou plusieurs monomères du groupe des esters d'acide acrylique et des esters d'acide méthacrylique, qui sont à chaque fois choisis de telle manière que les températures de transition vitreuse $T_G$ des homopolymères correspondants du monomère respectif ne soient pas supérieures à -30 °C (monomères b)

   B) au moins un agent de réticulation bifonctionnel ou polyfonctionnel réticulant de manière covalente (composant B),

   les composants A et B totalisant au moins 95 % en poids de la masse de polymère,
   **caractérisée en ce que**
   l'au moins un agent de réticulation est présent en une quantité telle
   que le rapport de quantités V = $n_Z/n_P$ de la quantité de matière $n_Z$ des centres actifs en réticulation de l'agent de réticulation sur la quantité de matière théorique $n_P$ des macromolécules du composant A1 de type polymère possède une valeur comprise entre 0,15 et 0,60,
   la quantité de matière $n_Z$ des centres actifs en réticulation de l'agent de réticulation étant obtenue en multipliant le nombre f des centres actifs en réticulation par molécule d'agents de réticulation par la masse $m_V$ de l'agent de réticulation divisée par la masse molaire $M_V$ de l'agent de réticulation, c'est-à-dire $n_Z = f \cdot m_V/M_V$,
   et la quantité de matière théorique $n_P$ des macromolécules du composant A1 de type polymère étant obtenue en divisant la masse $m_P$ du composant de type polymère dans la masse autoadhésive par la masse molaire moyenne en nombre $M_{n,P}$ de ce composant, c'est-à-dire $n_P = m_P/M_{n,P}$.

2. Utilisation selon la revendication 1 pour le collage de composants d'articles électroniques de biens de consommation, en particulier de fenêtres d'affichage.

3. Utilisation selon l'une quelconque des revendications précédentes, **caractérisée en ce que** les monomères a1 sont présents à raison de 3 à 5 % en poids, par rapport au composant A1.

4. Utilisation selon l'une quelconque des revendications précédentes, **caractérisée en ce qu'**au moins une partie des monomères sont choisis dans le groupe comprenant l'acrylate de méthyle, l'acrylate d'éthyle, le méthacrylate de méthyle et le méthacrylate d'éthyle (monomères a2).

5. Utilisation selon la revendication 4, **caractérisée en ce que** les monomères a2 sont présents à raison de jusqu'à 10 % en poids, par rapport au composant A1.

6. Utilisation selon l'une quelconque des revendications précédentes, **caractérisée en ce que** le composant A de type polymère comprend en outre jusqu'à 12, préférablement jusqu'à 10 % en poids d'un composant de type résine (composant A2) doté d'un point de ramollissement de 80 à 150°C.

7. Utilisation selon l'une quelconque des revendications précédentes, **caractérisée en ce que caractérisée en ce que** l'agent de réticulation est un agent de réticulation réagissant de manière covalente.

18

**8.** Utilisation selon la revendication 6, **caractérisée en ce qu'**en tant qu'agent de réticulation, un composé chimique contenant à la fois des fonctions époxy et également des fonctions amine dans la molécule, est utilisé.

**9.** Utilisation selon l'une quelconque des revendications précédentes, **caractérisée en ce que** la tétraglycidyl-méta-xylènediamine est utilisée en tant qu'agent de réticulation.

**10.** Utilisation selon l'une quelconque des revendications précédentes, **caractérisée en ce que** le rapport de quantités $V = n_Z/n_P$ de la quantité de matière $n_Z$ des centres actifs en réticulation de l'agent de réticulation sur la quantité de matière théorique $n_P$ des macromolécules du composant A1 de type polymère possède une valeur comprise entre 0,38 et 0,59.

**11.** Utilisation selon l'une quelconque des revendications précédentes, **caractérisée en ce que** les couches de masses autoadhésives sont géométriquement identiques sur les deux côtés de la couche de support.

**12.** Utilisation selon l'une quelconque des revendications précédentes, **caractérisée en ce que** les masses autoadhésives sont chimiquement identiques sur les deux côtés de la couche de support.

1.1

1.2

1.3

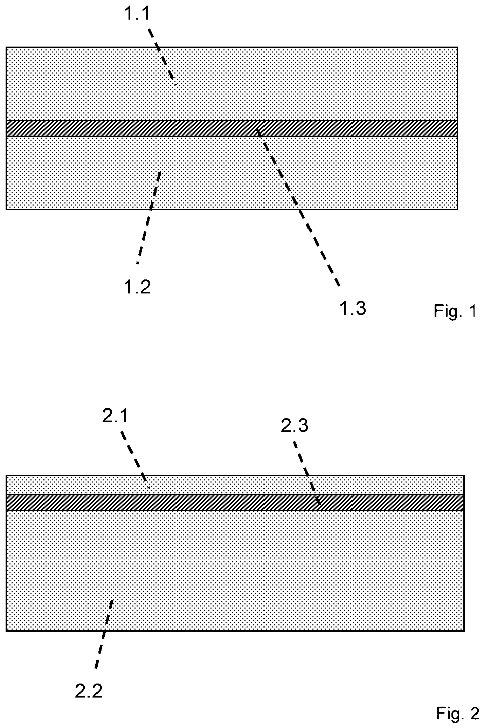

Fig. 1

2.1

2.3

2.2

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2010209649 A
- EP 1520896 A
- WO 2011000716 A

**In der Beschreibung aufgeführte Nicht-Patentliteratur**

- *CHEMICAL ABSTRACTS,* 63738-22-7
- *CHEMICAL ABSTRACTS,* 65992-66-7